# EUROPÄISCHE PATENTANMELDUNG

(11) **EP 4 329 161 A1**
(43) Veröffentlichungstag der Anmeldung: **28.02.2024**
(21) Anmeldenummer: 23191829.3
(22) Anmeldetag: 17.08.2023
(51) Int. Cl.: H02K 7/18, H02K 11/225

(54) **RADSEITE**

(30) Priorität: 24.08.2022 DE 102022121431
(71) Anmelder: Kessler & Co. GmbH & Co. KG, 73453 Abtsgmünd (DE)
(72) Erfinder: Bittlingmaier, Günter, 73432 Aalen (DE)
(74) Vertreter: Manitz Finsterwald Patent- und Rechtsanwaltspartnerschaft mbB

(57) **Zusammenfassung**

Eine Radseite umfasst: einen Elektromotor, der einen Stator und einen Rotor umfasst; eine Antriebswelle, die mit dem Rotor zu gemeinsamer Drehung um eine Antriebsachse verbunden ist, so dass eine vom Elektromotor erzeugte Antriebsleistung über die Antriebswelle an weitere Komponenten der Radseite ausgebbar ist; sowie einen Resolver zum Erfassen der Winkellage des Rotors, wobei der Resolver ein Standteil und ein Drehteil umfasst und das Drehteil des Resolvers mit dem Rotor des Elektromotors zu gemeinsamer Drehung um die Antriebsachse verbunden ist. Dabei ist der Resolver separat von dem Elektromotor ausgebildet. Ferner ist vorgesehen, dass die Radseite ein Formschlusselement aufweist, das bezüglich der Antriebsachse exzentrisch angeordnet ist und einerseits in ein am Drehteil ausgebildetes Loch und andererseits in ein am Rotor ausgebildetes Loch formschlüssig eingreift, um eine definierte Winkellage des Drehteils relativ zu dem Rotor sicherzustellen.

## Beschreibung

Die Erfindung betrifft eine Radseite, die einen Elektromotor mit Stator und Rotor zur Erzeugung einer Antriebsleistung umfasst. Bei einer solchen Radseite braucht die Antriebsleistung also nicht von außerhalb der Radseite, beispielsweise von einem zentralen Motor eines Fahrzeugs, empfangen zu werden, sondern die Erzeugung der Antriebsleistung ist in die Radseite integriert. Um die erzeugte Antriebsleistung vom Elektromotor auf weitere Komponenten der Radseite, insbesondere letztlich auf eine Radnabe der Radseite, übertragen zu können, umfasst die Radseite eine Antriebswelle, die als Ausgangswelle des Elektromotors fungiert und sich entlang einer Antriebsachse der Radseite erstreckt, um die sie drehbar ist.

Für die Ansteuerung des Elektromotors ist es in der Regel wichtig, die Winkellage des Rotors und/oder der damit verbundenen Antriebswelle präzise zu überwachen. Typischerweise wird dazu ein Resolver verwendet, der die Winkellage fortlaufend erfasst. Der Resolver weist dabei seinerseits einen Rotor und einen Stator auf, die zur begrifflichen Unterscheidung vom Rotor und vom Stator des Elektromotors im Folgenden als Drehteil bzw. Standteil bezeichnet werden.

Für das Erfassen der Winkellage ist der Resolver mit dem Elektromotor gekoppelt, indem das Drehteil des Resolvers (gegebenenfalls über die Antriebswelle) mechanisch mit dem Rotor des Elektromotors verbunden ist, so dass sich das Drehteil und der Rotor gemeinsam drehen. Dabei ist es wichtig, dass die Ausrichtung des Resolvers und des Elektromotors relativ zueinander, insbesondere die Winkellage des Drehteils des Resolvers relativ zu dem Rotor des Elektromotors, äußerst präzise bekannt ist, damit nicht nur eine Änderung der Winkellage, sondern auch die absolute Winkellage des Rotors zuverlässig erfasst werden kann.

Der Elektromotor stellt oftmals (gegebenenfalls zusammen mit der Antriebswelle) eine von der übrigen Radseite weitgehend unabhängige Baugruppe dar. Als solche wird der Elektromotor als Ganzes an einer tragenden Struktur, etwa einem Gehäuse, der Radseite abgestützt und lediglich antriebswirksam mit der übrigen Radseite gekoppelt. Insofern kann der Elektromotor auch hinsichtlich seiner Lagerung von der übrigen Radseite weitgehend unabhängig sein. In einem solchen Elektromotor ist der Resolver oftmals direkt integriert.

Bei einem in den Elektromotor integrierten Resolver kann der Resolver einmalig vergleichsweise präzise relativ zu dem Elektromotor positioniert und mit diesem gekoppelt werden. Zudem kann anschließend noch eine, insbesondere softwareseitige, Kalibrierung vorgenommen werden, wodurch verbleibende Abweichungen erfasst und dauerhaft hinterlegt werden können. Dies kann dann beim Auslesen des Resolvers berücksichtigt werden, um einen präzisen Wert für die Winkellage des Rotors des Elektromotors zu erhalten.

Es kann jedoch auch zweckmäßig sein, den Elektromotor weniger unabhängig von der übrigen Radseite auszubilden und den Resolver nicht fest in den Elektromotor zu integrieren. Gründe hierfür können sich beispielweise aus speziellen Beschränkungen des Bauraums ergeben. Eine weniger unabhängige Ausbildung des Elektromotors und eine von dem Elektromotor separate Ausbildung des Resolvers können außerdem ermöglichen, etwa für den Fall einer Wartung, mit vergleichsweise wenig Aufwand an Teile der Radseite zu gelangen, zu denen der Zugang ansonsten versperrt wäre.

Ein Elektromotor, der lediglich indirekt, nämlich über die Antriebswelle, gelagert ist, wird beispielsweise in CN 110588310 A beschrieben. Der Resolver ist dabei von dem Elektromotor separat ausgebildet. Konkret ist der Resolver an einem Ende der axialen Erstreckung der Antriebswelle angeordnet, während die Antriebswelle an dem dazu entgegengesetzten Ende ihrer axialen Erstreckung mit dem Rotor des Elektromotors verbunden ist.

Mit einer separaten Ausbildung des Resolvers geht jedoch zugleich einher, dass beim Einbauen des Resolvers in die Radseite (und gegebenenfalls jedem weiteren Einbauen beispielsweise nach einem vorübergehenden Ausbauen im Rahmen einer Wartung) die Winkellage zwischen dem Drehteil des Resolvers und dem Rotor des Elektromotors (wieder) möglichst präzise eingestellt und anschließend eine Kalibrierung zum Erfassen der verbleibenden Abweichungen durchgeführt werden muss. Wenn ein von dem Elektromotor separat ausgebildeter Resolver mit dem Elektromotor nur mittelbar verbunden ist, kann es zudem sein, dass die Winkellage durch störende Einflüsse, wie etwa Spiel oder sonstige Toleranzen, eines oder mehrerer den Resolver mit dem Elektromotor verbindender Elemente nicht präzise beibehalten wird.

Es ist eine Aufgabe der Erfindung, eine Radseite der eingangs genannten Art bereitzustellen, die vergleichsweise kompakt ausgebildet sein kann, dabei eine gute Zugänglichkeit zu ihrem Komponenten bietet und bei der auf einfache Weise eine hohe Zuverlässigkeit beim Erfassen der Winkellage des Rotors des Elektromotors gewährleistet ist.

Die Aufgabe wird gelöst durch eine Radseite mit den Merkmalen des Anspruchs 1. Vorteilhafte Ausführungsformen ergeben sich aus den Unteransprüchen, der vorliegenden Beschreibung sowie den Figuren.

Die erfindungsgemäße Radseite umfasst: einen Elektromotor, der einen Stator und einen Rotor umfasst; eine Antriebswelle, die mit dem Rotor zu gemeinsamer Drehung um eine Antriebsachse verbunden ist, so dass eine vom Elektromotor erzeugte Antriebsleistung über die Antriebswelle an weitere Komponenten der Radseite ausgebbar ist; sowie einen Resolver zum Erfassen der Winkellage des Rotors, wobei der Resolver ein Standteil und ein Drehteil umfasst und das Drehteil des Resolvers mit dem Rotor des Elektromotors zu gemeinsamer Drehung um die Antriebsachse verbunden ist.

Der Elektromotor kann dabei, insbesondere hinsichtlich seiner Funktionsweise, auf grundsätzlich bekannte Weise ausgebildet sein. Die elektromotorisch herbeigeführte Drehbewegung des Rotors relativ zu dem Stator wird vom Elektromotor über die Antriebswelle ausgegeben. Da die Antriebswelle zu gemeinsamer Drehung mit dem Rotor verbunden ist, dreht sie sich dabei zusammen mit dem Rotor jeweils in dieselbe Richtung und mit derselben Geschwindigkeit um die Antriebsachse. Die Antriebswelle kann den Elektromotor beispielsweise mit einer Getriebestufe der Radseite verbinden. Letztlich kann die vom Elektromotor erzeugte und über die Antriebswelle ausgegebene Antriebsleistung zu einer Radnabe der Radseite übertragen werden, um ein daran gegebenenfalls angeordnetes Rad anzutreiben.

Mittels des Resolvers kann überwacht werden, welche Winkellage der Rotor des Elektromotors relativ zu einer bestimmten stationären Referenz, insbesondere relativ zum Stator, aufweist. Bei dem Resolver handelt es sich um einen elektromagnetischen Winkellagengeber, der ein von der Winkellage seines Drehteils relativ zu seinem Standteil abhängiges Signal erzeugen und ausgeben kann. Das Standteil ist daher zweckmäßigerweise stationär angeordnet, während das Drehteil mit dem Rotor des Elektromotors zu gemeinsamer Drehung verbunden und dadurch um die Antriebsachse drehbar ist.

Die Verbindung des Drehteils mit dem Rotor kann grundsätzlich durch Befestigungsmittel, wie etwa Schrauben, erfolgen. Vorzugsweise erfolgt die Verbindung dann an mehreren, insbesondere drei oder mehr, Befestigungspunkten, die in Umfangsrichtung um die Antriebsachse verteilt sind und an denen jeweils ein Befestigungsmittel vorgesehen ist. Die Befestigungspunkte können dabei im Wesentlichen regelmäßig verteilt sein. Ihre Anordnung weist jedoch vorzugsweise keine Rotationssymmetrie auf, damit das Drehteil und der Rotor zumindest im Wesentlichen in nur einer Winkellage relativ zueinander durch die Befestigungsmittel zu gemeinsamer Drehung miteinander verbunden werden können. Eine solche Art der Verbindung, insbesondere eine Verbindung mittels Schrauben, ist jedoch in der Regel nicht ausreichend, eine definierte Winkellage des Drehteils relativ zum Rotor sicherzustellen, nämlich die Winkellage mechanisch so präzise vorzugeben, dass eine anschließende, insbesondere softwareseitige, Kalibrierung der Winkellage des Drehteils des Resolvers relativ zur Winkellage des Rotors des Elektromotors nicht mehr erforderlich ist.

Erfindungsgemäß ist der Resolver separat von dem Elektromotor ausgebildet. Insbesondere ist der Resolver nicht derart in den Elektromotor integriert, dass der Elektromotor und der Resolver als gemeinsame Baugruppe in die Radseite eingebaut beziehungsweise aus der Radseite ausgebaut werden müssen. Vielmehr lässt sich der Resolver vorteilhafterweise aus der Radseite ausbauen, ohne dass dazu zwangsläufig auch der Elektromotor ausgebaut werden müsste; umgekehrt kann bei der Montage der Radseite zunächst der Elektromotor eingebaut und der Resolver anschließend daran angebracht werden. Zudem ist der Resolver vorzugsweise unabhängig vom Elektromotor gelagert, insbesondere nicht an dem Elektromotor gelagert.

Des Weiteren ist erfindungsgemäß vorgesehen, dass die Radseite ein Formschlusselement aufweist, das bezüglich der Antriebsachse exzentrisch angeordnet ist und einerseits in ein am Drehteil ausgebildetes Loch und andererseits in ein am Rotor ausgebildetes Loch formschlüssig eingreift, um eine definierte Winkellage des Drehteils relativ zu dem Rotor sicherzustellen. Der Formschluss liegt dabei zweckmäßigerweise in bezüglich der Antriebsachse umlaufender Richtung vor.

Insbesondere kann das Formschlusselement bezüglich der Antriebsachse axial in die beiden Löcher eingreifen und sie dann nicht in eine um die Antriebsachse umlaufende Richtung verlassen.

Sofern die genannten Befestigungsmittel zur Verbindung des Drehteils mit dem Rotor vorgesehen sind, ist das Formschlusselement zusätzlich zu diesen vorgesehen und unterscheidet sich von diesen hinsichtlich seiner Form und seiner Funktionsweise. Insbesondere braucht das Formschlusselement im Unterschied zu den Befestigungsmitteln nicht primär der Übertragung eines Drehmoments beim Betrieb des Elektromotors zu dienen. Vielmehr ist das Formschlusselement vorteilhafterweise dazu ausgebildet, durch das Eingreifen in die genannten am Drehteil und am Rotor ausgebildeten Löcher das Drehteil auf die definierte Winkellage relativ zum Rotor festzulegen, gegebenenfalls schon bevor das Drehteil und der Rotor zu gemeinsamer Drehung fest miteinander verbunden sind. Beim anschließenden festen Verbinden für eine zuverlässige Übertragung der Drehung vom Rotor auf das Drehteil verändert sich die Winkellage dann nicht mehr, sondern wird allenfalls noch stabilisiert.

Grundsätzlich können das Drehteil und der Rotor aber auch ausschließlich durch das Formschlusselement miteinander verbunden sein. In diesem Fall sind also keine zusätzlichen Befestigungsmittel zur Verbindung des Drehteils mit dem Rotor vorgesehen.

Bei den beiden Löchern, die in dem Drehteil bzw. dem Rotor ausgebildet sind, kann es sich jeweils beispielsweise um eine einfache Bohrung handeln. Dabei können die Löcher als Durchgangsbohrung oder als Sackloch ausgebildet sein. Insbesondere kann eines der beiden Löcher als Sackloch und das andere als Durchgangsbohrung ausgebildet sein. Insbesondere wenn die Löcher als einfache Bohrungen ausgebildet sind, kann das Formschlusselement gemäß einer vorteilhaften Ausführungsform als Passstift ausgebildet sein. Ein solcher Passstift weist vorzugsweise eine einfache zylindrische Form auf (sogenannter Zylinderstift), wobei die Kanten abgerundet oder mit einer Fase versehen sein können. Alternativ zu einer Ausbildung als Passstift kommt insbesondere in Betracht, das Formschlusselement als Spannstift oder als Passschraube auszubilden, wobei bei einer Ausbildung als Passschraube zumindest eines der Löcher vorzugsweise als Gewindebohrung ausgebildet ist. Die Ausbildung als Passstift, Spannstift oder Passschraube ermöglicht eine vergleichsweise einfache, dabei aber präzise Herstellung des Formschlusselements.

Grundsätzlich kann das Formschlusselement auch mehrteilig ausgebildet sein und dann mit einem Teil in das am Drehteil ausgebildete Loch und mit einem anderen Teil in das am Rotor ausgebildete Loch formschlüssig eingreifen. Die beiden Teile können unmittelbar miteinander verbunden sein. Alternativ dazu kann das Formschlusselement auch ein oder mehrere weitere Teile umfassen, über die die weiteren Teile miteinander verbunden sind. Beispielsweise kann das Formschlusselement ein Zwischenstück sowie zwei an dem Zwischenstück befestigte Passstifte umfassen, von denen eines in das am Drehteil ausgebildete Loch und das andere in das am Rotor ausgebildete Loch formschlüssig eingreift.

Gemäß einer weiteren vorteilhaften Ausführungsform ist das Formschlusselement sowohl mit dem Drehteil als auch mit dem Rotor in bezüglich der Antriebsachse umlaufender Richtung spielfrei verbunden, nämlich insbesondere durch das genannte Eingreifen in das jeweilige Loch. Durch die spielfreie Verbindung brauchen keine sonstigen Vorkehrungen dafür getroffen zu werden, dass in Umlaufrichtung um die Antriebsachse weder Bewegungen zwischen dem Formschlusselement und dem Drehteil des Resolvers noch Bewegungen zwischen dem Formschlusselement und dem Rotor des Elektromotors möglich sind. Vielmehr ergibt sich vorteilhafte Weise direkt aus dem Eingreifen des Formschlusselements in das jeweilige Loch die definierte Winkelausrichtung zwischen dem Drehteil und dem Formschlusselement sowie zwischen dem Formschlusselement und dem Rotor und somit auch zwischen dem Drehteil und dem Rotor.

Gemäß einer weiteren vorteilhaften Ausführungsform ist das Formschlusselement in das am Drehteil ausgebildete Loch und in das am Rotor ausgebildete Loch jeweils mit Übermaß eingepresst. Dazu kann es zweckmäßig sein, dass das Formschlusselement und die Löcher jeweils einen kreisrunden Querschnitt aufweisen. Die sich ergebende Presspassung des in die beiden Löcher eingreifenden Formschlusselements kann ursächlich für die vorstehend beschriebene Spielfreiheit sein oder zumindest wesentlich dazu beitragen.

Grundsätzlich können zum Sicherstellen der definierten Winkellage des Drehteils relativ zu dem Rotor mehrere Formschlusselemente vorgesehen sein, die jeweils einerseits in ein jeweiliges am Drehteil ausgebildetes Loch und andererseits in ein am Rotor ausgebildetes Loch formschlüssig eingreifen. Vorzugsweise ist jedoch gemäß einer weiteren vorteilhaften Ausführungsform zwischen dem Drehteil und dem Rotor nur genau ein Formschlusselement der beschriebenen Art vorgesehen. Hierin kann sich das Formschlusselement insbesondere von den genannten Befestigungsmitteln unterscheiden. Durch eine solche Ausführungsform kann vermieden werden, dass es zwischen den Formschlusselementen zu Verspannungen kommt.

Es kann aber an anderer Stelle zweckmäßig sein, zumindest ein weiteres Formschlusselement vorzusehen, insbesondere wenn der Rotor des Elektromotors mehrteilig ausgebildet ist. Das weitere Formschlusselement kann dann dazu dienen, eine definierte Winkellage der Teile des Rotors zueinander sicherzustellen.

Insofern kann gemäß einer weiteren vorteilhaften Ausführungsform vorgesehen sein, dass der Rotor des Elektromotors zum einen ein Rotorteil, das mit dem Stator zusammenwirkt (d. h. dass die elektromotorische Wechselwirkung zur Erzeugung der Antriebsleistung zwischen dem Stator und dem Rotorteil erfolgt), und zum anderen eine Zwischennabe umfasst, die bezüglich der Antriebsachse radial innerhalb des Rotorteils angeordnet ist und über die das Rotorteil mit der Antriebswelle verbunden ist, wobei das am Rotor ausgebildete Loch, in welches das Formschlusselement eingreift, an der Zwischennabe ausgebildet ist, und wobei die Radseite ein weiteres Formschlusselement aufweist, das bezüglich der Antriebsachse exzentrisch angeordnet ist und einerseits in ein an der Zwischennabe ausgebildetes weiteres Loch und andererseits in ein am Rotorteil ausgebildetes Loch formschlüssig eingreift, um eine definierte Winkellage der Zwischennabe relativ zu dem Rotorteil sicherzustellen.

Die Zwischennabe und das Rotorteil sind vorzugweise nicht ausschließlich durch das weitere Formschlusselement miteinander verbunden. Vielmehr ist es bevorzugt, wenn die Zwischennabe und das Rotorteil durch Befestigungsmittel, wie etwa Schrauben, die sich von dem Formschlusselement hinsichtlich ihrer Form und ihrer Funktionsweise unterscheiden, zu gemeinsamer Drehung miteinander verbunden sind. Vorzugsweise erfolgt die Verbindung dann an mehreren, insbesondere drei oder mehr, Befestigungspunkten, die in Umfangsrichtung um die Antriebsachse verteilt sind und an denen jeweils ein Befestigungsmittel vorgesehen ist. Die Befestigungspunkte können dabei im Wesentlichen regelmäßig verteilt sein, ihre Anordnung weist jedoch vorzugsweise keine Rotationssymmetrie auf, damit das Drehteil und der Rotor zumindest im Wesentlichen in nur einer Winkellage relativ zueinander durch die Befestigungsmittel zu gemeinsamer Drehung miteinander verbunden werden können. Die daraus resultierende Unwucht wird konstruktiv ausgeglichen.

Für dieses weitere Formschlusselement können aus entsprechenden Gründen entsprechende Weiterbildungen wie bei dem Formschlusselement, das zwischen dem Drehteil und dem Rotor vorgesehen ist, vorteilhaft sein. Insbesondere kann das weitere Formschlusselement als Passstift ausgebildet sein. Vorzugsweise ist das weitere Formschlusselement sowohl mit dem Rotorteil als auch mit der Zwischennabe in bezüglich der Antriebsachse umlaufender Richtung spielfrei verbunden. Das weitere Formschlusselement kann in das an der Zwischennabe ausgebildete weitere Loch und in das am Rotorteil ausgebildetes Loch jeweils mit Übermaß eingepresst sein. Außerdem ist es bevorzugt, wenn nur genau ein derartiges weiteres Formschlusselement zwischen der Zwischennabe und dem Rotorteil vorgesehen ist.

Gemäß einer weiteren vorteilhaften Ausführungsform ist der Resolver bezüglich der Antriebsachse radial innerhalb des Stators und axial innerhalb der axialen Erstreckung des Stators angeordnet. Eine solche Anordnung des Resolvers kann zu einer besonders kompakten Ausbildung der Radseite beitragen.

Gemäß einer weiteren vorteilhaften Ausführungsform erstreckt sich die Antriebswelle entlang der Antriebsachse von einem ersten Ende, an dem sie mit dem Rotor verbunden ist, zu einem zweiten Ende, zu dem sie die vom Elektromotor erzeugte Antriebsleistung überträgt und an eine der weiteren Komponenten der Radseite ausgibt, wobei der Resolver in axialer Verlängerung der Antriebswelle über das erste Ende hinaus angeordnet ist. Bei den weiteren Komponenten kann es sich beispielsweise um funktionale Baugruppen wird ein Versatzgetriebe, ein Untersetzungsgetriebe oder dergleichen handeln. Die Verbindung der Antriebswelle mit dem Rotor muss dabei nicht unbedingt ganz am Rand ihrer axialen Erstreckung erfolgen, sondern erfolgt im Bereich des ersten Endes, was einen ganzen ersten Endabschnitt der Antriebswelle umfassen kann. In entsprechender Weise muss die Antriebswelle nicht ganz am entgegengesetzten Rand ihrer axialen Erstreckung mit der jeweiligen weiteren Komponente der Radseite zusammenwirken, sondern sie wirkt im Bereich ihres zweiten Endes mit dieser zusammen, was einen ganzen zweiten Endabschnitt der Antriebswelle umfassen kann.

Durch die beschriebene Anordnung ist der Resolver bezüglich der Antriebsachse gerade entgegengesetzt zu derjenigen Komponente angeordnet, die durch die Antriebswelle mit dem Elektromotor verbunden wird. Auch eine solche Anordnung kann zu einer kompakten Ausbildung der Radseite beitragen. Zudem kann der Resolver dadurch besonders leicht zugänglich sein. Außerdem kann der Resolver durch eine Anordnung im Bereich des ersten Endes der Antriebswelle besonders nah am Elektromotor angeordnet sein und dadurch die Winkellage des Rotors besonders unmittelbar erfassen.

Die Erfindung bezieht sich auch auf eine Portalachse für ein Kraftfahrzeug, mit zwei Radseiten der erläuterten Art, die über eine Achsbrücke miteinander verbunden sind. Derartige Portalachsen kommen insbesondere bei Niederflur-Omnibussen, beispielsweise bei Nahverkehrs- und Stadtbussen, zum Einsatz, wobei ein möglichst großer Freiraum (hinsichtlich der vertikalen Tiefe und auch der horizontalen Breite) für die Passagiere erwünscht ist.

Die Erfindung wird im Folgenden anhand der Figuren beispielhaft weiter erläutert.
- Fig. 1: zeigt eine erste Ausführungsform einer erfindungsgemäßen Radseite in stark vereinfachter schematischer Darstellung.
- Fig. 2: zeigt eine zweite Ausführungsform einer erfindungsgemäßen Radseite in stark vereinfachter schematischer Darstellung.

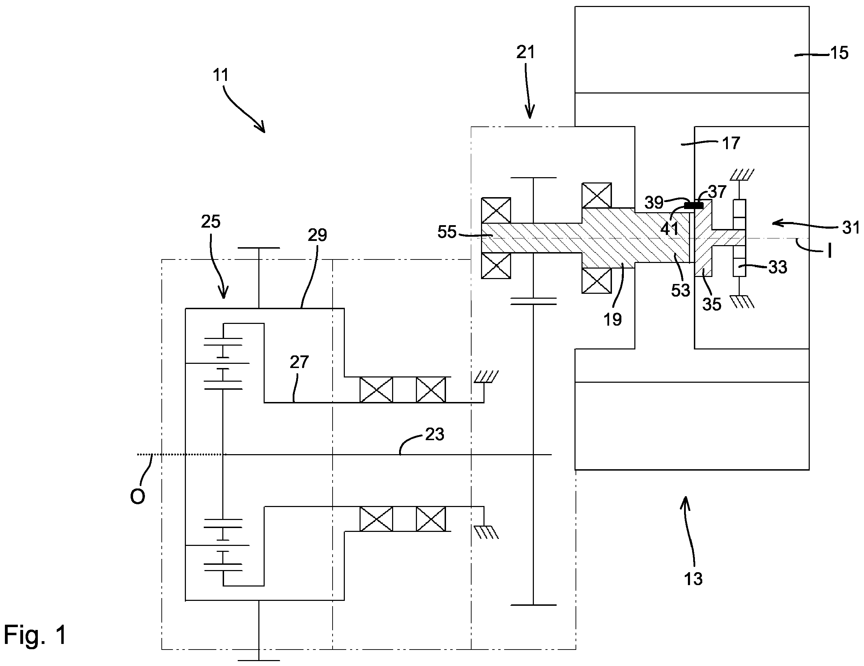

Die in Fig. 1 dargestellte Radseite 11 ist gemäß einer ersten Ausführungsform der Erfindung ausgebildet und umfasst einen Elektromotor 13, der einen stationären Stator 15 und einen relativ zu dem Stator 15 drehbaren Rotor 17 aufweist, sowie eine Antriebswelle 19, die sich entlang einer Antriebsachse I von einem ersten Ende 53 zu einem zweiten Ende 55 erstreckt und mit dem ersten Ende 53 mit dem Rotor 17 des Elektromotors 13 zu gemeinsamer Drehung um die Antriebsachse I verbunden ist, so dass sie sich bei Drehung des Rotors 17 in dieselbe Drehrichtung und mit derselben Drehgeschwindigkeit wie dieser ebenfalls dreht.

Die Radseite 11 umfasst ferner ein Versatzgetriebe 21, das als einfache Stirnradstufe ausgebildet ist, eine Abtriebswelle 23, ein als untersetzendes Planetengetriebe ausgebildetes Radnabengetriebe 25, einen Nabenträger 27 sowie eine Radnabe 29. Die Antriebswelle 19 ist mit ihrem zweiten Ende 55 mit einem Antriebsrad des Versatzgetriebes 21 verbunden. Ein damit kämmendes Abtriebsrad des Versatzgetriebes 21 ist mit einem Ende der Abtriebswelle 23 verbunden, deren anderes Ende mit einem Sonnenrad des Radnabengetriebes 25 verbunden ist. Ein Planetenträger des Radnabengetriebes 25 ist mit der Radnabe 29 verbunden, die an dem Nabenträger 27 drehbar gelagert ist, an dem zugleich ein Hohlrad des Radnabengetriebes 25 ausgebildet ist. Durch diesen Aufbau wird ein von dem Elektromotor 13 erzeugtes Antriebsmoment von der Antriebswelle 19 entlang der Antriebsachse I zum Versatzgetriebe 21 übertragen, von dem es zu einer Abtriebsachse O versetzt wird, entlang welcher es dann von der Abtriebswelle 23 über das Radnabengetriebe 25 weiter bis zur Radnabe 29 übertragen wird.

Grundsätzlich könnte das Versatzgetriebe 21 auch mehrstufig oder komplexer ausgebildet sein. Des Weiteren könnte das Radnabengetriebe 25 auch fehlen, so dass die Abtriebswelle 23 das Versatzgetriebe 21 direkt mit der Radnabe 29 verbindet.

Die Radseite 11 weist ferner einen Resolver 31 auf, der ein stationäres Standteil 33 und ein relativ zu dem Standteil 33 drehbares Drehteil 35 umfasst und dazu ausgebildet ist, in Abhängigkeit von der Winkellage des Drehteils 35 relativ zu dem Standteil 33 ein entsprechendes Signal auszugeben. Das Drehteil 35 ist dabei zu gemeinsamer Drehung mit dem Rotor 17 des Elektromotors 13 verbunden, so dass sich mittels des Resolvers 31 die Winkellage des Rotors 17 relativ zum Stator 15 des Elektromotors 13 erfassen lässt.

Der Resolver 31 ist in bezüglich der Antriebsachse I axialer Verlängerung der Antriebswelle 19 über deren erstes Ende 53 hinaus angeordnet. Dabei befindet sich der Resolver 31 radial innerhalb des Stators 15 und axial innerhalb der axialen Erstreckung des Stators 15 des Elektromotors 13. Dadurch ist das Drehteil 35 des Resolvers 31 axial benachbart zum Rotor 17 angeordnet.

Sowohl in dem Drehteil 35 als auch in dem Rotor 17 ist jeweils ein Loch 37 bzw. 39 ausgebildet. Die beiden Löcher 37, 39, die jeweils als Sackloch ausgebildet sind, erstrecken sich entgegengesetzt zueinander in bezüglich der Antriebsachse I axialer Richtung, sind in übereinstimmendem radialem Abstand von der Antriebsachse I angeordnet und weisen übereinstimmende, nämlich bei der beispielhaften ersten Ausführungsform kreisrunde, Querschnitte auf.

Dadurch kann ein als einfacher Passstift ausgebildetes Formschlusselement 41 einerseits in das am Drehteil 35 ausgebildete Loch 37 und andererseits in das am Rotor 17 ausgebildete Loch 39 axial eingreifen, wodurch sich ein Formschluss in um die Antriebsachse I umlaufender Richtung ergibt. Das Formschlusselement 41 ist dabei in die Löcher 37, 39 jeweils mit Übermaß eingepresst, so dass das Drehteil 35 des Resolvers 31 und der Rotor 17 des Elektromotors 13 durch das Formschlusselement 41 auf eine definierte Winkellage relativ zueinander festgelegt werden.

Die auf diese Weise mechanisch zuverlässig definierte Winkellage des Drehteils 35 relativ zu dem Rotor 17 erlaubt ein einfaches Ausbauen und Wiedereinbauen des Resolvers 31, beispielsweise im Falle einer Wartung, ohne dass dadurch eine aufwändige Kalibrierung erforderlich würde. Denn die Verbindung zwischen dem Drehteil 35 und dem Rotor 17 kann dabei auf einfache Weise in axialer Richtung gelöst und anschließend mit derselben definierten Winkellage erneut wiederhergestellt werden. Grundsätzlich ist es auch denkbar, die Löcher 37, 39 so präzise auszuführen, dass sogar auf eine Erstkalibrierung verzichtet werden kann.

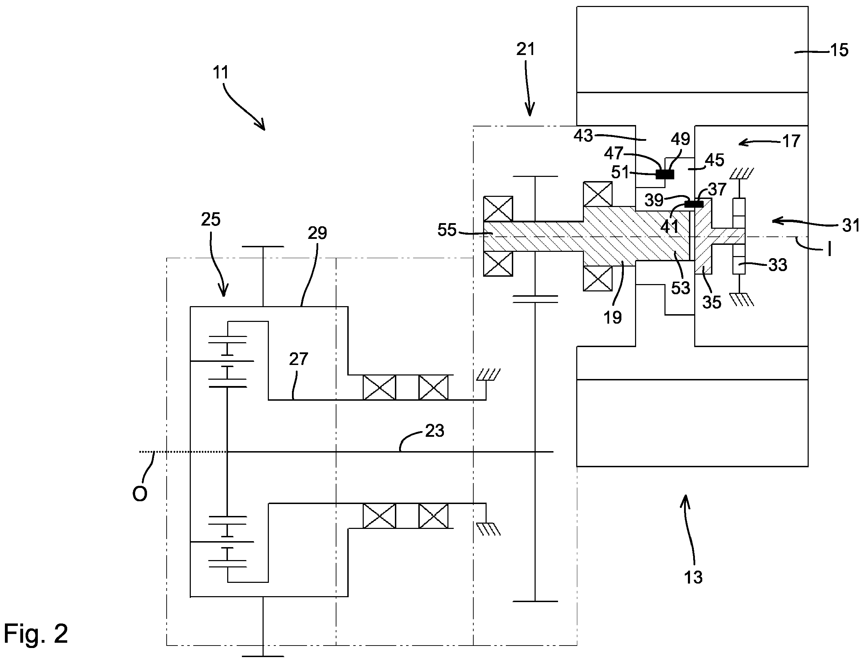

Die in Fig. 2 gezeigte zweite Ausführungsform stimmt weitgehend mit der in Fig. 1 gezeigten ersten Ausführungsform überein, so dass in beiden Figuren dieselben Bezugszeichen verwendet werden und von einer Beschreibung der übereinstimmenden Teile abgesehen wird. Der Unterschied der zweiten Ausführungsform zur ersten Ausführungsform besteht darin, dass der Rotor 17 des Elektromotors 13 bei der ersten Ausführungsform einteilig und bei der zweiten Ausführungsform zweiteilig ausgebildet ist, nämlich ein Rotorteil 43 und eine Zwischennabe 45 umfasst. Dabei wirkt das Rotorteil 43 mit dem Stator 15 zusammen und ist über die Zwischennabe 45, die bezüglich der Antriebsachse I radial innerhalb des Rotorteils 43 angeordnet ist, mit der Antriebswelle 19 verbunden. Das genannte an dem Rotor 17 ausgebildete Loch 39 ist dabei an der Zwischennabe 45 ausgebildet.

Das Rotorteil 43 und die Zwischennabe 45 weisen jeweils einen Flanschabschnitt auf und liegen mit ihren Flanschabschnitten axial aneinander an. Entlang dieser Anlagefläche sind das Rotorteil 43 und die Zwischennabe 45 an mehreren Befestigungspunkten, die in Umfangsrichtung um die Antriebsachse I verteilt sind, miteinander verschraubt (nicht dargestellt). Das Rotorteil 43 und die Zwischennabe 45 sind dabei derart ausgebildet, dass die Zwischennabe 45 (nach Lösen der Verschraubung) in die bezüglich der Antriebsachse I axiale Richtung, in die die Antriebswelle 19 mit ihrem ersten Ende 53 weist, von dem Rotorteil 43 gelöst werden kann. Auf diese Weise können, beispielsweise für eine Wartung, etwa für den Austausch einer Dichtung, durch Ausbauen des Resolvers 31 und der Zwischennabe 45 ansonsten schwer zugängliche Bereiche der Radseite 11 axial durch das Rotorteil 43 hindurch zugänglich gemacht werden.

An dem Rotorteil 43, nämlich in dessen Flanschabschnitt, ist ein Loch 47 ausgebildet; an der Zwischennabe 45, nämlich in deren Flanschabschnitt, ist ein weiteres Loch 49 ausgebildet. Ähnlich wie die Löcher 37, 39 erstrecken sich diese beiden Löcher 47, 49, die wiederum jeweils als Sackloch ausgebildet sind, entgegengesetzt zueinander in bezüglich der Antriebsachse I axialer Richtung, sind in übereinstimmendem radialem Abstand von der Antriebsachse I angeordnet und weisen übereinstimmende, nämlich bei der beispielhaften zweiten Ausführungsform kreisrunde, Querschnitte auf.

Die gemäß der zweiten Ausführungsform ausgebildete Radseite 11 umfasst ein weiteres Formschlusselement 51, das einerseits in das an dem Rotorteil 43 ausgebildete Loch 47 und andererseits in das an der Zwischennabe 45 ausgebildete weitere Loch 49 formschlüssig eingreift, so dass dadurch eine definierte Winkellage zwischen dem Rotorteil 43 und der Zwischennabe 45 sichergestellt wird. Somit wird bei der zweiten Ausführungsform durch die beiden Formschlusselemente 41, 51 trotz der zweiteiligen Ausbildung des Rotors 17 dennoch insgesamt eine definierte Winkellage des Drehteils 35 des Resolvers 31 relativ zu dem mit dem Stator 15 zusammenwirkenden Rotorteil 43 des Rotors 17 des Elektromotors 13 erreicht.

### Bezugszeichen

- 11: Radseite
- 13: Elektromotor
- 15: Stator
- 17: Rotor
- 19: Antriebswelle
- 21: Versatzgetriebe
- 23: Abtriebswelle
- 25: Radnabengetriebe
- 27: Nabenträger
- 29: Radnabe
- 31: Resolver
- 33: Standteil
- 35: Drehteil
- 37: Loch
- 39: Loch
- 41: Formschlusselement
- 43: Rotorteil
- 45: Zwischennabe
- 47: Loch
- 49: weiteres Loch
- 51: weiteres Formschlusselement
- 53: erstes Ende
- 55: zweites Ende
- I: Antriebsachse
- O: Abtriebsachse

## Patentansprüche

1. Radseite (11) mit einem Elektromotor (13), der einen Stator (15) und einen Rotor (17) umfasst, mit einer Antriebswelle (19), die mit dem Rotor (17) zu gemeinsamer Drehung um eine Antriebsachse (I) verbunden ist, so dass eine vom Elektromotor (13) erzeugte Antriebsleistung über die Antriebswelle (I) an weitere Komponenten (21, 23, 25, 29) der Radseite (11) ausgebbar ist, sowie mit einem Resolver (31) zum Erfassen der Winkellage des Rotors (17), wobei der Resolver (31) ein Standteil (33) und ein Drehteil (35) umfasst und das Drehteil (35) des Resolvers (31) mit dem Rotor (17) des Elektromotors (13) zu gemeinsamer Drehung um die Antriebsachse (I) verbunden ist,
wobei der Resolver (31) separat von dem Elektromotor (13) ausgebildet ist, und wobei die Radseite (11) ein Formschlusselement (41) aufweist, das bezüglich der Antriebsachse (I) exzentrisch angeordnet ist und einerseits in ein am Drehteil (35) ausgebildetes Loch (37) und andererseits in ein am Rotor (17) ausgebildetes Loch (39) formschlüssig eingreift, um eine definierte Winkellage des Drehteils (35) relativ zu dem Rotor (17) sicherzustellen.

2. Radseite nach Anspruch 1,
wobei das Formschlusselement (31) als Passstift, Spannstift oder Passschraube ausgebildet ist.

3. Radseite nach Anspruch 1 oder 2,
wobei das Formschlusselement (31) sowohl mit dem Drehteil (35) als auch mit dem Rotor (17) in bezüglich der Antriebsachse (I) umlaufender Richtung spielfrei verbunden ist.

4. Radseite nach einem der vorstehenden Ansprüche,
wobei das Formschlusselement (31) in das am Drehteil (35) ausgebildete Loch (37) und in das am Rotor (17) ausgebildete Loch (39) jeweils mit Übermaß eingepresst ist.

5. Radseite nach einem der vorstehenden Ansprüche,
wobei nur genau ein derartiges Formschlusselement (31) zwischen dem Drehteil (35) und dem Rotor (17) vorgesehen ist.

6. Radseite nach einem der vorstehenden Ansprüche,
wobei der Rotor (17) des Elektromotors (13) ein Rotorteil (43), das mit dem Stator (15) zusammenwirkt, und eine Zwischennabe (45) umfasst, die bezüglich der Antriebsachse (I) radial innerhalb des Rotorteils (43) angeordnet ist und über die das Rotorteil (43) mit der Antriebswelle (19) verbunden ist, wobei das am Rotor (17) ausgebildete Loch (39), in welches das Formschlusselement (31) eingreift, an der Zwischennabe (45) ausgebildet ist, und wobei die Radseite (11) ein weiteres Formschlusselement (41) aufweist, das bezüglich der Antriebsachse (I) exzentrisch angeordnet ist und einerseits in ein an der Zwischennabe (45) ausgebildetes weiteres Loch (49) und andererseits in ein am Rotorteil (43) ausgebildetes Loch (47) formschlüssig eingreift, um eine definierte Winkellage der Zwischennabe (45) relativ zu dem Rotorteil (43) sicherzustellen.

7. Radseite nach einem der vorstehenden Ansprüche,
wobei der Resolver (31) bezüglich der Antriebsachse (I) radial innerhalb des Stators (15) und axial innerhalb der axialen Erstreckung des Stators (15) angeordnet ist.

8. Radseite nach einem der vorstehenden Ansprüche,
wobei sich die Antriebswelle (19) entlang der Antriebsachse (I) von einem ersten Ende (53), an dem sie mit dem Rotor (17) verbunden ist, zu einem zweiten Ende (55) erstreckt, zu dem sie die vom Elektromotor (13) erzeugte Antriebsleistung überträgt und an eine der weiteren Komponenten (21, 23, 25, 29) der Radseite (11) ausgibt,
und wobei der Resolver (31) in axialer Verlängerung der Antriebswelle (19) über das erste Ende (53) hinaus angeordnet ist.

9. Portalachse mit zwei Radseiten (11) nach einem der vorhergehenden Ansprüche, die über eine Achsbrücke miteinander verbunden sind.
